Europäisches Patentamt

European Patent Office

Office européen des brevets

(19)

(11) Veröffentlichungsnummer : **0 403 943 B1**

## (12) EUROPÄISCHE PATENTSCHRIFT

(45) Veröffentlichungstag der Patentschrift :
**15.07.92 Patentblatt 92/29**

(51) Int. Cl.⁵ : **F16L 59/05,** F16L 59/02,
F16L 51/00

(21) Anmeldenummer : **90111162.5**

(22) Anmeldetag : **13.06.90**

(54) **Thermische Isolierung für Rohrleitungskompensatoren.**

(30) Priorität : **21.06.89 CH 2315/89**

(43) Veröffentlichungstag der Anmeldung :
**27.12.90 Patentblatt 90/52**

(45) Bekanntmachung des Hinweises auf die
Patenterteilung :
**15.07.92 Patentblatt 92/29**

(84) Benannte Vertragsstaaten :
**AT CH DE LI NL SE**

(56) Entgegenhaltungen :
**EP-B- 0 164 006
DE-A- 3 003 708
DE-A- 3 636 341**

(73) Patentinhaber : **ISOLFEU AG ZURICH
Leutschenbachstrasse 71
CH-8050 Zürich (CH)**

(72) Erfinder : **Wirth, Toni
Bolsternstrasse 24
CH-8483 Kollbrunn (CH)**
Erfinder : **Thomann, Alfred
Brunaustrasse 58
CH-8002 Zürich (CH)**

(74) Vertreter : **Scheidegger, Werner & Co.
Troesch Scheidegger Werner AG
Siewerdtstrasse 95
CH-8050 Zürich (CH)**

EP 0 403 943 B1

**Beschreibung**

Die Erfindung betrifft eine thermische Isolierung für Rohrleitungskompensatoren, welche ihre Länge. zwischen zwei Endflanschen durch thermische Einflüsse verändern.

Rohrleitungskompensatoren werden in Rohrleitung eingebaut, welche im Betrieb abwechselnd hohen und tiefen Temperaturen ausgesetzt sind und infolgedessen einer thermischen Längenänderung unterworfen sind. Mit der Länge einer Rohrleitung nimmt auch das Ausmass der Wärmedehnung der Rohrleitung bei hohen Temperaturen zu. Diese Wärmedehnungen erfolgen in einem Rohrleitungssystem von definierten Fixpunkten aus und werden zwischen diesen mittels der sogenannten Rohrleitungskompensatoren aufgefangen. Von dem Verlauf einer Rohrleitung hängt es ab, ob sogenannte Axial-Kompensatoren oder Angular-Kompensatoren eingebaut werden. Bei diesen Kompensatoren handelt es sich im Prinzip um Rohrabschnitte mit einer Rohrwandung, die sich wie ein Balg zieharmonikaartig strecken und zusammenziehen oder biegen (bei Angular-Kompensatoren) kann und in einer Art von Käfig mit relativ zueinander beweglichen Endflanschen gehalten ist.

Wenn lange Rohrleitungen isoliert werden müssen, bereitet es Schwierigkeiten, die in diese eingebauten Rohrleitungskompensatoren mit gleich gutem Wirkungsgrad zu isolieren, weil ja an diesen Stellen die durch thermischen Einfluss verursachten Längenänderungen auftreten. Man hat daher bisher entweder an diesen Stellen einer Rohrleitung, an denen Rohrleitungskompensatoren vorhanden sind, ganz auf eine Isolierung verzichtet und den Wärmeverlust in Kauf genommen. Bei sehr heissen Leitungen braucht man dann einen Berührungsschutz in Form einer mechanischen Barriere oder einer Hinweistafel, die auf die Gefahr aufmerksam macht. Um den Wärmeverlust nicht in Kauf zu nehmen, hat man auch Blechaussenverschalungen mit übereinandergleitenden Blechen vorgesehen, wobei der Hohlraum mit Dämmstoff ausgestopft wird, jedoch ist eine solche Verschalung nicht demontierbar. Des weiteren sind für eine Isolierung auch Blechkappen vorgesehen worden, bei denen der Dämmstoff allseitig mit Blech umschlossen ist, wobei diese Blechkappen starr sind, sodass für die Längsbewegungen innerhalb der Blechkappe entsprechende Hohlräume vorhanden sein müssen.

Die bekannten Einrichtungen weisen verschiedene Nachteile auf, beispielsweise kann bei übereinandergleitenden Verschalungsblechen zwischen diese Wasser eindringen und den Dämmstoff zerstören. Bei mechanischen Beschädigungen an den Blechen ist ein einwandfreies Gleiten derselben nicht mehr gewährleistet. Ein weiterer Nachteil besteht darin, dass durch Blechkappen eine unerwünschte Wärmebrücke gebildet wird. Wenn im Innern einer Blechkappe Hohlräume vorhanden sein müssen, wird die Isolierwirkung durch dabei auftretende Konvektionsströmung entscheidend verringert. Ausserdem sind derartige Blechkappen unhandlich und schwer und auch bei möglicher Demontierbarkeit passen sie nach einer Beschädigung nicht mehr auf den Kompensator.

Die DE-A-3 003 708 zeigt eine Ganzmetallwärmedämmung bzw eine rein metallische Isolierung, wie sie für Kernreaktoranlagen verwendet werden. Die Metallisolierung wird deshalb verwendet, da man der Ansicht ist, dass dies die einzige Art ist, eine Isolierung dekontaminierbar zu machen. Die nach dieser Druckschrift "gekrümmten Dämmfolien" mit denen die starren Isolierkassetten gefüllt sind, sollen die Wärmekonvektion unterbinden und dadurch eine gewisse Isolierwirkung zwischen dem inneren und äusseren Mantel erzeugen. Aus der Art dieser Konstruktion ergibt sich die Notwendigkeit, zwischen den an sich starren Kassetten bzw. "Wärmedämmbausteinen" eine flexible Verbindung anzuordnen, um dadurch Dimensionsänderungen der Isolierung selbst aufzufangen. Die in der DE-A-3 003 708 vorgeschlagene Ganzmetallwärmedämmung ist aber ebenfalls nicht als Rohrleitungskompensator geeignet, insbesondere zum Auffangen von Wärmedehnung der Rohrleitung bei hohen Temperaturdifferenzen.

Der vorliegenden Erfindung lag daher die Aufgabe zugrunde, eine flexible Isolierung für Rohrleitungskompensatoren zu schaffen, die demontierbar und auch wieder montierbar ist und die nach dem Prinzip allgemein angewendeter Isolierkissen weich ist, um an den isolierten Gegenstand angepasst werden zu können und trotzdem formstabil ist. Insbesondere aber soll sie flexibel sein, damit sie in der Lage ist, die axialen und angularen Bewegungen eines von der Isolierung umschlossenen Rohrleitungskompensators mit auszuführen. Zur Lösung dieser Aufgaben weist die Isolierung die Merkmale gemäss Anspruch 1 auf. Bevorzugte Ausführungsformen der Isolierung weisen die in den abhängigen Ansprüchen angeführten Merkmale auf.

Im Gegensatz zur DE-A-3 003 708 wird erfindungsgemäss eine Isolierung von Rohrleitungskompensatoren vorgeschlagen. Dabei handelt es sich um Rohrstücke, die bewusst als Balg ausgebildet sind, um Longitudinal-oder Angularbewegungen von Rohrleitungen zu kompensieren. Aus diesem Grunde werden die Halbschalen der Isolierung zwischen die Stirnseiten der beiden anschliessenden Festisolierungen eingeklemmt. Diese Vorspannung erlaubt, einer Ausdehnung des Kompensators zu folgen, was beispielsweise mit einer Ganzmetallwärmedämmung, bekannt aus dem Stand der Technik, nicht möglich ist. Die erfindungsgemäss vorgeschlagene Isolation grenzt sich weiter gegenüber dem Stand der Technik durch die Tatsache ab, dass die Isolierung hauptsächlich aus Glasgewebe, gefüllt mit einer Dämmschicht, besteht.

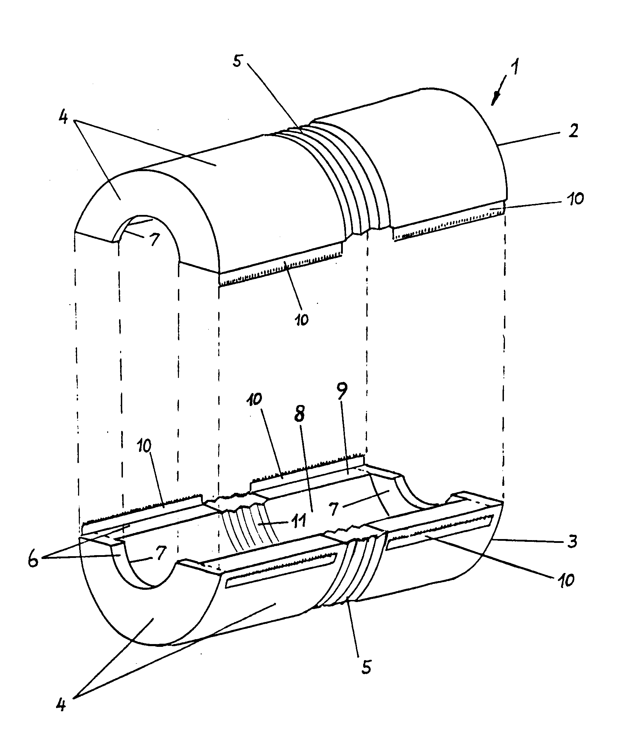

Ein Ausführungsbeispiel der thermischen Isolierung wird nachfolgend anhand der Zeichnung näher beschrieben. Die Zeichnung zeigt die zwei Halbschalen der Isolierung auseinandergezogen und schaubildlich dargestellt.

Der im zusammengefügten Zustand zylindrische Isolierkörper 1 besteht aus einer oberen Halbschale 2 und einer unteren Halbschale 3, die gleich ausgebildet sind. Jede Halbschale besitzt eine Aussenhülle 4 mit aufgedampfter Aluminiumfolie und mit einer aus V4A-Drahtgewebe bestehenden Verstärkung. Dieses Drahtgewebe fehlt im Bereich einer in der Mitte halbringförmig als Balg 5 ausgebildeten Knautschzone, die Längenänderungen des Isolierkörpers zulässt. Das Glasgewebe mit aufgedampfter Aluminiumfolie und V4A-Drahtgewebe umfasst ausser der zylindrischen Aussenseite auch die stirnseitigen Endflächen.Glasgewebe mit V4A-Drahtgewebe verstärkt bedeckt auch die Fugenflächen 6, an denen die beiden Halbschalen 2 und 3 aufeinanderliegen, sowie ferner die Innenflächen an den stirnseitigen Enden der Halbschalen, welche Innenflächen bei den zusammengesetzten Halbschalen eine runde Oeffnung umschliessen, in welcher ein Rohrstück des in der Zeichnung nicht dargestellten Rohrleitungskompensators zu liegen kommt, der mit Hilfe des aus den beiden Halbschalen bestehenden Isolierkörpers 1 isoliert werden soll. Unter das Glasgewebe 4 sind an den Stirnenden Halbringe 7 aus formstabilem Material eingenäht. Diese sogenannten Cerablock-Halbringe bestehen aus einem hochtemperaturbeständigen Plattenmaterial und verleihen den Halbschalen zusammen mit dem Drahtgewebe die Formstabilität.

Die Innenhülle 8 besteht wie die Aussenhülle 4 aus Glasgewebe mit aufgedampfter Aluminiumfolie und mit einer aus V4A-Drahtgewebe bestehenden Verstärkung, wobei jedoch die Aluminiumfolie dem Füllmaterial 9 zugekehrt und somit nicht sichtbar ist. Diese Aluminiumfolie fehlt im Bereich einer in der Mitte halbringförmig als Balg 11 ausgebildeten Knautschzone. Der Zwischenraum zwischen der Aussenhülle 4 und der Innenhülle 8 ist mit Füllmaterial 9 in Gestalt von Steinwollematten aufgefüllt. Das mit V4A-Drahtgewebe verstärkte Glasgewebe der Innenhülle 8 schützt vor mechanischer Beschädigung und passt sich unregelmässigen Formen des nicht dargestellten Rohrleitungskompensators an.

An jeder der beiden Halbschalen 2 und 3 sind an den längsverlaufenden Rändern mit Ausnahme des mittleren als Balg 5 ausgebildeten Bereichs temperaturbeständige Reissverschlüsse 10 angeordnet, die zusammenzufügen sind, um die beiden Halbschalen 2 und 3 miteinander zu verbinden.

Der Isolierkörper wird bei der Montage zwischen die Enden der anschliessenden Festisolierung der Rohrleitung geklemmt. Durch Zusammendrücken des eine Federwirkung ausübenden Balgs 5 bei der Montage wird auf die Federwirkung eine Vorspannung erzeugt, sodass auf diese Weise die Stirnseiten des Isolierkörpers zwangsläufig allen axialen und angularen Bewegungen aufgrund von thermisch verursachten Längenänderungen folgen.

Die Vorteile dieser thermischen Isolierung bestehen in dem geringen Gewicht derselben sowie der leichten Montage und Demontage mit Hilfe der Reissverschlüsse. Von Vorteil ist ferner die weiche Oberfläche, sodass keine Gefahr einer mechanischen Beschädigung durch Schläge besteht und trotzdem eine gute Formstabilität vorhanden ist. Es wird keine Wärmebrücke gebildet und es sind keine Hohlräume vorhanden, die zu unerwünschter Luftkonvektion im Innern führen. Die Isolierung gewährt eine flexible Anpassung an unregelmässige Formen des zu isolierenden Kompensators sowie eine hohe Lebensdauer dank der Verstärkungen mit V4A-Drahtgewebe. Durch die Verwendung der geeigneten Materialien wird eine sehr gute Wärmedämmung erzielt mit absoluter Dichtheit in allen Betriebszuständen des Rohrleitungskompensators.

## Patentansprüche

1. Thermische Isolierung für Rohrleitungskompensatoren, welche ihre Länge zwischen zwei Endflanschen durch thermische Einflüsse verändern, mit einem, den Kompensator ringsum zu umfassen bestimmten Isolierkörper (1), bestehend aus zwei Halbschalen (2,3), wobei jede Halbschale eine aus Glasgewebe mit aufgedampfter Aluminiumfolie bestehende Aussenhülle (4) mit einem in jeder Halbschale als halbringförmige Zone in der Mitte in die Aussenhülle integrierten, als Knautschzone wirkenden balg (5), eine aus Glasgewebe bestehende Innenhülle (8) mit einem in jeder Halbschale als halbringförmige Zone in der Mitte in die Innenhülle integrierten, als Knautschzone wirkenden balg (11) und mit einer mindestens bereichsweise aufgedampften Aluminiumfolie sowie eine den Zwischenraum zwischen Aussen- und Innenhülle ausfüllende Dämmschicht (9) aufweist und die Aussenhülle (4) ferner an den Halbschalen-Stirnwänden innenseitig des Glasgewebes angeordnete Halbringe (7) aus formstabilem Material als feste Aussteifungen aufweist und die beiden Halbschalen (2,3) des Isolierkörpers (1) mittels an der Aussenhülle (4) jeder Halbschale beidseits der Knautschzone (5) angeordneter Verbindungsmittel (10) miteinander verbindbar sind.

2. Isolierung nach Anspruch 1, dadurch gekennzeichnet, dass die Verbindungsmittel entlang der Halbschalenränder beider Halbschalen (2,3) sich erstreckende temperaturbeständige Reissverschlüsse (10) sind.

3. Isolierung nach Anspruch 1, dadurch gekennzeichnet, dass das Glasgewebe der Aussenhülle (4) mit Ausnahme der Knautschzone (5) zwecks Erhöhung der Formstabilität mit V4A-Drahtgewebe verstärkt ist.

4. Isolierung nach Anspruch 1, dadurch gekennzeichnet, dass das Glasgewebe der Innenhülle (8) einschliesslich der Knautschzone (11) zwecks Erhöhung der Formstabilität mit V4A-Drahtgewebe verstärkt ist.

5. Isolierung nach Anspruch 4, dadurch gekennzeichnet, dass die Innenhülle (8) zusätzlich zur V4A-Drahtgewebeverstärkung eine mit Ausnahme in der Knautschzone (11) aufgedampfte Aluminiumfolie aufweist, welche der Dämmstoff-Füllung (9) zugekehrt ist.

6. Isolierung nach Anspruch 1, dadurch gekennzeichnet, dass die Halbringe (7) an den Stirnenden unter das Glasgewebe der Aussenhülle (4) eingenäht sind.

7. Isolierung nach Anspruch 1, dadurch gekennzeichnet, dass die Dämmschicht aus Steinwollmatten besteht.

## Claims

1. Thermal insulation for pipe-line compensators of a length between two end flanges varying under the influence of thermal effects, comprising an insulation body (1) provided for completely surrounding said compensator and being formed of two semimonocoques (2,3), each semimonocoque having an outer shell (4) formed by spun glass fabrics and covered with an aluminium foil applied by vaporisation, a bellows (5) serving as deformable zone being integrated in the form of a semiring-shaped zone in the middle of said outer shell, an inner shell (8) formed by spun glass fabrics, a bellows (11) serving as deformable zone being integrated in the form of a semiring-shaped zone in the middle of said inner shell and an aluminium foil being applied at least in certain zones by vaporisation, and an insulating layer (9) filling out the volume between said outer shell and said inner shell, said outer shell (4) furthermore comprising on the front walls of said semimonocoques on the inner side of the spun glass fabrics half-rings (7) of non-deformable material forming rigid reinforcements as well as coupling means (10) provided on both sides of the deformable zone (5) on the outer shell (4) of each semimonocoque for interconnecting said semimonocoques 62,3) of the insulation body (1).

2. Insulation according to claim 1, characterized in that said coupling means are formed by temperature resisting slide-fasteners (10) extending along the edges of the two semimonocoques (2,3).

3. Insulation according to claim 1, characterized in that said spun glass fabrics of the outer shell (4) is reinforced, with the exception of the deformable zone (5), with a V4A-wire fabric in order to increase the inherent form-stability.

4. Insulation according to claim 1, characterized in that said spun glass fabrics of the inner shell (8) including said deformable zone (11) is reinforced by a V4A-wire fabric in order to increase the inherent form-stability.

5. Insulation according to claim 4, characterized in that said inner shell (8) comprises in addition to the reinforcement by means of said V4A-wire fabric an aluminium foil applied by vaporisation on said shell with the exception of the deformable zone (11), said foil being applied on the side facing said insulating layer (9).

6. Insulation according to claim 1, characterized in that said half-rings (7) on the front walls are sewed under the spun glass fabrics of the outer shell (4).

7. Insulation according to claim 1, characterized in that the insulating layer comprises mats of mineral wool.

## Revendications

1. Isolation thermique pour compensateurs de tuyaux dont la longueur entre deux flasques terminaux varrie sous l'influence d'effets thermiques, comprenant un corps isolant (1) destiné à entourer le compensateur et formé de deux semi-monocoques (2,3), dont chacun présente une gaine extérieure (4) formée d'un tissu en verre muni d'une feuille d'aluminium apportée par vaporisation, avec une partie annelée (5) servant de zone déformable intégrée sous forme d'une zone semi-annulaire au milieu de la gaine extérieure, une gaine intérieure (8) formée d'un tissu en verre avec une partie annelée (11) servant de zone déformable intégrée sous forme d'une zone semi-annulaire au milieu de la gaine intérieure et avec une feuille d'aluminium apportée par vaporisation au moins dans certaines zones, ainsi qu'une couche isolante (9) remplissant le volume entre la gaine extérieure et la gaine intérieure, la gaine extérieure (4) comprenant d'autre part sur les faces frontales des semi-monocoques sur la face intérieure du tissu en verre des semi-anneaux (7) en un matériau indéformable formant des renforcements solides et des moyens de raccordement (10) prévus des deux côtés de la zone déformable (5) sur la gaine extérieure (4) de chaque semi-monocoque permettant de raccorder les deux semi-monocoques (2,3) du corps isolant (1).

2. Isolation selon la revendication 1, caractérisée en ce que les moyens de raccordement sont formés par des fermetures à glissière (10) résistant à la température s'étendant le long des bords des deux semi-monocoques (2,3).

3. Isolation selon la revendication 1, caractérisée en ce que le tissu de verre de la gaine extérieure (4) est renforcé, à l'exception de la zone déformable (5), par un V4A-tissu en fils de métal pour augmenter la stabilité de forme.

4. Isolation selon la revendication 1, caractérisé en ce que le tissu de verre de la gaine intérieure (8), y compris la zone déformable (11), est renforcé par un V4A-tissu en fils de métal pour augmenter la stabilité de forme.

5. Isolation selon la revendication 4, caractérisée en ce que la gaine intérieure (8), en addition au renforcement par le V4A-tissu en fils de métal, à l'exception de la zone déformable (11), est munie d'une feuille d'aluminium apportée par vaporisation et prévue en face de la couche isolante (9).

6. Isolation selon la revendication 1, caractérisée en ce que les semi-anneaux (7) sur les faces frontales sont cousus sous le tissu en verre de la gaine extérieure (4).

7. Isolation selon la revendication 1, caractérisée en ce que la couche isolante est formée de tapis en laine minérale.